# FASCICULE DE BREVET EUROPEEN

(11) **EP 0 440 536 B1**
(45) Date de publication et mention de la délivrance du brevet: **02.11.1994**
(21) Numéro de dépôt: 91400182.1
(22) Date de dépôt: 28.01.1991
(51) Int. Cl.: F16F 13/00, H02K 33/14

(54) **Perfectionnements aux dispositifs antivibratoires hydrauliques**
Verbesserungen zu hydraulischen schwingungsverhindernden Vorrichtungen
Improvements to hydraulic anti-vibration devices

(30) Priorité: 30.01.1990 FR 9001075; 19.09.1990 FR 9011559
(43) Date de publication de la demande: 07.08.1991
(73) Titulaire: HUTCHINSON, F-75384 Paris Cédex 08 (FR)
(72) Inventeur: Gennesseaux, André, F-45120 Chalette/Loing (FR)
(74) Mandataire: Behaghel, Pierre

(56) Documents cités:
- DE-A- 3 423 698
- FR-A- 2 599 799
- PATENT ABSTRACTS OF JAPAN vol. 7, no. 177 (M-233)(1322) 5 août 1983,& JP-A-58 81246 (NISSAN JIDOSHA KK) 16 mai 1983,
- PATENT ABSTRACTS OF JAPAN vol. 12, no. 371 (M-748)(3218) 5 octobre 1988,
- & JP-A-63 120931 (MAZDA MOTOR CORPORATION) 25 mai 1988,
- PATENT ABSTRACTS OF JAPAN vol. 12, no. 371 (M-748)(3218) 5 octobre 1988,& JP-A-63 120933 (MAZDA MOTOR CORPORATION) 25 mai 1988,

## Description

L'invention est relative aux dispositifs antivibratoires hydrauliques destinés à être interposés aux fins d'amortissement et de liaison, voire de support, entre deux éléments rigides tels qu'un châssis de véhicule et que le moteur de ce véhicule.

Elle concerne plus particulièrement, parmi ces dispositifs, ceux qui comportent :
- deux armatures rigides solidarisables respectivement avec les deux éléments rigides à réunir,
- une structure d'entretoisement en élastomère reliant entre elles les deux armatures et formant au moins en partie avec celles-ci deux chambres étanches,
- une passage étranglé faisant communiquer en permanence les deux chambres entre elles,
- une masse de liquide remplissant les deux chambres et le passage étranglé,
- et un clapet rigide délimitant en partie, directement ou par l'intermédiaire d'une pièce liée rigidement à lui, l'une des deux chambres et monté de façon à pouvoir se déplacer avec une amplitude de débattement limitée.

Comme on le sait, avec un tel dispositif :
- les oscillations de relativement grande amplitude (savoir supérieure à 0,5 mm) et de relativement basse fréquence (savoir de l'ordre de 5 à 15 Hz) telles que celles dues au "hachis" engendré sur le véhicule par les cahots de la route ont pour effet de refouler le liquide de l'une des deux chambres dans l'autre et inversement à travers le passage étranglé, avec mise en résonance de la masse liquide ainsi refoulée lorsque la fréquence desdites oscillations atteint une valeur prédéterminée qui est fonction du rapport entre la longueur axiale et la section droite du passage étranglé, cette mise en résonance assurant un excellent amortissement des oscillations concernées,
- les vibrations de relativement petite amplitude (inférieure à 0,5 mm) et de relativement haute fréquence (généralement comprise entre 20 et 200 Hz), telles que celles dues au fonctionnement du moteur se traduisent par des vibrations du clapet susceptibles d'atténuer ou filtrer la transmission des vibrations en cause.

Dans les modes de réalisation connus des dispositifs du genre en question, le clapet est généralement libre de se déplacer entre ses deux butées et ce sont donc les vibrations auxquelles il est soumis naturellement en fonction des vibrations à amortir qui sont exploitées aux fins d'atténuation désirée.

Pour renforcer cet effet atténuateur ou filtrant, on a déjà essayé de supprimer le caractère "naturel" des vibrations utiles et exploitables du clapet en les modifiant d'une façon artificielle et imposée, méthode parfois désignée sous l'appellation "atténuation active".

A cet effet, il a été proposé de constituer au moins partiellement le clapet par un élément ferromagnétique et d'appliquer sur cet élément, à l'aide de bobines électriques, des "contre-vibrations", c'est-a-dire des efforts alternatifs de même fréquence que les vibrations à réduire, orientés selon la même direction que ces vibrations et de sens contraire (brevet US-4 650 170). Le document US-A-4 650 170 présente l'état de la technique selon le préambule de la revendication 1 de l'invention.

Pour améliorer la réponse du clapet à ces efforts, il a été proposé en outre :
- de guider le clapet par au moins une bague déformable de façon qu'il ne puisse se déplacer qu'en translation selon la direction "axiale" des vibrations auxquelles il est soumis,
- et de séparer du liquide amortisseur les intervalles compris entre le clapet et les bobines par au moins un joint annulaire étanche (brevet FR-2 599 799).

Mais les réalisations ainsi proposées ne peuvent pas donner satisfaction dans la pratique du fait que l'excitation des bobines électriques de commande des contre-vibrations est asservie non pas en boucle fermée aux vibrations même du clapet, mais en boucle ouverte aux vibrations d'un moteur de véhicule donnant naissance aux vibrations à amortir et alors rigidement relié à l'une des deux armatures rigides du dispositif, sans aucun contrôle des résultats obtenus.

En effet, dans ces conditions, rien n'empêche que, lorsque le dispositif est soumis à des oscillations de basse fréquence et grande amplitude, le clapet vienne en contact avec ses butées au rythme desdites oscillations, de sorte qu'il est bloqué aux instants correspondant à ces applications et qu'il ne peut plus alors être soumis à des vibrations utiles au sens décrit ci-dessus : l'atténuation des vibrations à amortir est alors annulée au rythme desdites oscillations.

L'invention a pour but de rendre possible une atténuation active efficace permettant en particulier de supprimer l'inconvénient qui vient d'être signalé.

A cet effet, un dispositif antivibratoire du genre en question selon l'invention est associé à une seule première chaîne asservissant l'alimentation électrique de l'organe excitateur aux déplacements du clapet lui-même de façon telle que l'excitation due à cette seule première chaîne ait pour effet de réduire, voire d'annuler ces déplacements, ladite chaîne comprenant à cet effet un capteur desdits déplacements disposé à proximité immédiate dudit clapet.

Dans des modes de réalisation avantageux, on a recours en outre à l'une et/ou à l'autre des dispositions suivantes :
- le clapet est constitué au moins en partie par un élément ferromagnétique feuilleté et l'organe excitateur électrique est constitué par au moins une bobine électrique fixe associée à un circuit magnétique fixe feuilleté qui est séparé dudit élément par au moins un entrefer,
- le circuit magnétique feuilleté est de révolution autour d'un axe X et chaque bobine est constituée par une couronne d'axe X de bobines axiales élémentaires dont les noyaux magnétiques sont constitués à partir de feuilles en matériau magnétique parallèles à l'axe X enroulées cylindriquement autour de cet axe, la galette annulaire résultante étant découpée par des saignées radiales qui laissent subsister entre elles des créneaux plats en forme de secteurs circulaires constitutifs desdits noyaux,
- dans un dispositif pour lequel l'élément ferromagnétique se présente sous la forme d'un disque plat, le circuit magnétique feuilleté est constitué par des tunnels rectilignes ouverts vers le disque et composés par empilage de tôles identiques en forme de U épais,
- dans un dispositif pour lequel l'élément ferromagnétique se présente sous la forme d'un disque plat d'axe X, le circuit magnétique feuilleté est constitué par un tunnel circulaire d'axe X ouvert vers le disque et composé par des tôles identiques en forme de U épais parallèles à l'axe X et disposées en étoile autour de cet axe,
- le clapet se présente sous la forme générale d'une table à un pied central unique et deux plateaux circulaires parallèles, la face supérieure du plateau supérieur délimitant en partie l'une des deux chambres, et au moins la portion annulaire extérieure du plateau intermédiaire constituant l'élément ferromagnétique,
- l'organe excitateur électrique est constitué par un enroulement de fil électrique porté par le clapet, et des moyens sont prévus pour appliquer un champ magnétique permanent sur cet enroulement,
- le dispositif comprend en outre deux capteurs propres à capter respectivement les vibrations des deux armatures rigides et une seconde chaîne d'asservissement propre à élaborer, à partir des données recueillies par ces deux capteurs et éventuellement de données supplémentaires provenant notamment d'un moteur de véhicule donnant naissance aux vibrations à amortir, des signaux électriques d'alimentation de l'organe excitateur électrique, signaux propres à imposer au clapet théoriquement stabilisé par la première chaîne d'asservissement, des vibrations artificielles propres à annuler les vibrations apparaissant sur l'armature rigide à amortir,
- le clapet est interposé entre l'une des deux chambres remplies de liquide et une troisième chambre dépourvue de liquide et éventuellement mise à l'air libre,
- le clapet est monté dans une carcasse rigide qui est reliée aux deux armatures rigides par respectivement deux portions de la structure d'entretoisement en élastomère,
- le clapet et l'organe excitateur qui lui est associé sont montés sur celui, des deux éléments rigides, d'où parviennent les vibrations à amortir,
- l'organe excitateur est agencé de façon à solliciter le clapet dans un sens et un ressort de rappel est interposé, directement ou non, entre ce clapet et l'un des deux éléments rigides pour solliciter ledit clapet en sens inverse,
- le clapet est guidé par au moins une garniture annulaire constituée en un matériau alvéolaire, de préférence à porosité fermée,
- le dispositif est d'un type à double effet en ce sens que ses deux chambres sont disposées de part et d'autre du clapet et sont toutes les deux du type d'une chambre de travail, c'est-à-dire essentiellement délimitées chacune par une paroi élastique annulaire offrant une bonne résistance à la compression axiale et par des portions, des deux éléments rigides, entre lesquelles cette paroi est interposée,
- le dispositif comprend, associés à un même élément rigide et symétriques l'un de l'autre par rapport à l'axe commun aux deux éléments rigides, deux équipages complets composés par un clapet et par l'organe excitateur qui lui est associé, ces équipages étant montés de façon telle que les axes des deux clapets se coupent et soient inclinés de préférence l'un sur l'autre d'un angle de l'ordre de 90°.

L'invention comprend, mises à part ces dispositions principales, certaines autres dispositions qui s'utilisent de préférence en même temps et dont il sera plus explicitement question ci-après.

Dans ce qui suit, l'on va décrire quelques modes de réalisation préférés de l'invention en se référant aux dessins ci-annexés d'une manière bien entendu non limitative.

La figure 1, de ces dessins, montre schématiquement en coupe axiale un support antivibratoire hydraulique établi selon l'invention.

La figure 2 est un diagramme de chaînes d'asservissement associées à ce support conformément à l'invention.

La figure 3 montre schématiquement en coupe axiale une variante de support conforme à l'invention.

La figure 4 montre semblablement un autre mode de réalisation d'un détail de cette variante.

La figure 5 montre semblablement une variante d'un détail du premier mode de réalisation.

La figure 6 montre schématiquement en coupe axiale une autre variante de support selon l'invention.

La figure 7 est une coupe transversale de la figure 6 selon VII-VII.

La figure 8 est une variante de la figure 7.

Les figures 9 et 10 montrent, respectivement en coupe transversale selon IX-IX, figure 10, et en demi-coupe axiale selon X-X, figure 9, la construction feuilletée selon l'invention de pièces constitutives d'une variante de support selon l'invention.

La figure 11 montre très schématiquement une autre variante de support conforme à l'invention.

Les figures 12 et 13 montrent des détails de deux autres supports selon l'invention.

Les figures 14 et 15 montrent en coupe axiale schématique deux autres supports selon l'invention.

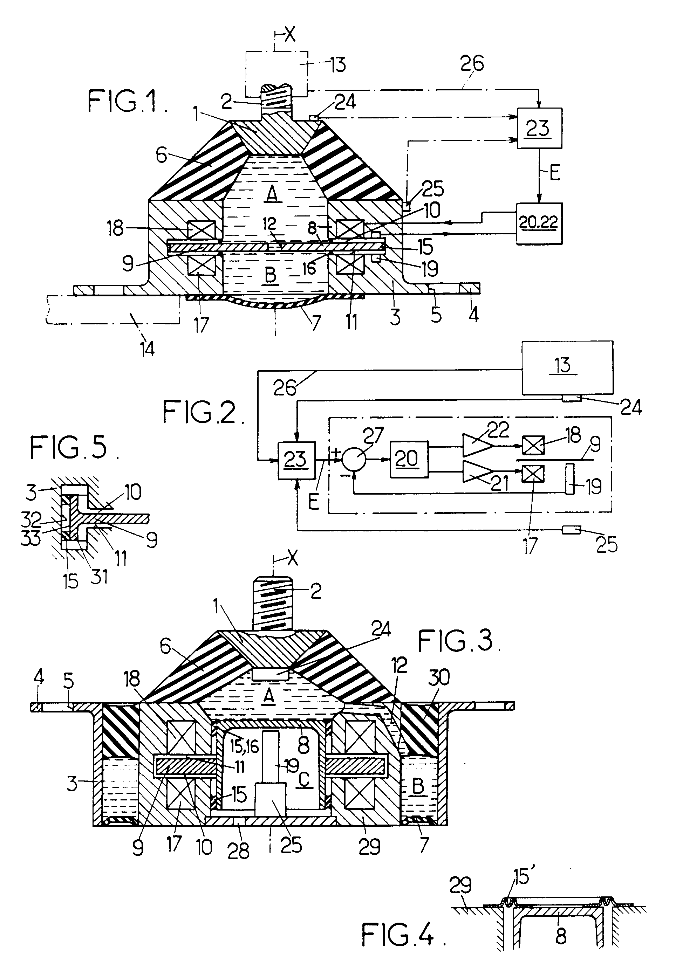

D'une façon connue en soi, le support considéré schématisé sur la figure 1 comprend :
- une embase rigide 1 constituée par un plot central prolongé vers le haut par un goujon 2 en attente,
- un anneau rigide 3 prolongé vers l'extérieur par deux pattes 4 elles-mêmes perforées par des trous de fixation 5,
- une paroi tronconique épaisse en caoutchouc 6 présentant une bonne résistance à la compression axiale de façon à jouer un rôle de "support" et reliant de façon étanche l'embase 1 à l'anneau 3,
- un soufflet mince et flexible 7 relié de façon étanche à l'anneau 3 et délimitant un boîtier fermé avec cet anneau, la paroi 6 et l'embase 1,
- un clapet 8 divisant ledit boîtier en deux chambres, savoir une chambre de travail A du côté de la paroi 6 et une chambre de compensation B du côté du soufflet 7, ledit clapet 8 étant constitué par un disque plat dont la périphérie forme une collerette ou rondelle 9 logée avec un jeu 10 dans une gorge 11 évidée dans l'anneau 3, ledit jeu étant de l'ordre de 0,5 mm de part et d'autre du disque,
- un passage étranglé 12 reliant les deux chambres A et B entre elles, passage ici évidé au centre du clapet 8,
- et une masse de liquide remplissant les deux chambres et le passage étranglé.

Dans les modes de réalisation auxquels l'invention s'applique de préférence et qui seront choisis à titre d'exemples non limitatifs pour le présent exposé, l'ensemble du support est de révolution ou sensiblement de révolution autour d'un axe X, l'embase rigide 1 supporte un moteur à combustion interne 13 de véhicule et l'anneau rigide 3 est monté sur le châssis 14 de ce véhicule.

Comme on le sait, les oscillations de relativement basse fréquence et grande amplitude appliquées au châssis 14 se traduisent par un refoulement alternatif à la même fréquence du liquide de l'un des deux compartiments A et B dans l'autre et inversement à travers le passage 12 et la colonne de liquide oscillante contenue dans ce passage est le siège d'un phénomène de résonance lorsque ladite fréquence atteint une valeur prédéterminée qui dépend des cotes dudit passage, ce phénomène ayant pour effet d'amortir la transmission des oscillations d'origine d'une armature à l'autre.

Dans les modes de réalisation habituels, le clapet 8 est libre de se débattre dans la gorge 11 et ce sont ses vibrations naturelles qui sont exploitées pour filtrer les vibrations de relativement haute fréquence et faible amplitude qui sont engendrées par le moteur 13, de façon à réduire la transmission de ces vibrations au châssis 14.

Ce sont ces vibrations que l'on se propose de contrôler efficacement selon l'invention en les commandant artificiellement de façon telle :
- qu'au moins elles ne puissent pas être neutralisées périodiquement par les oscillations de basse fréquence et grande amplitude appliquées à l'un des deux éléments rigides 1 et 3 par rapport à l'autre,
- et que de préférence en outre elles soient renforcées de façon à provoquer une "atténuation active" des vibrations du châssis allant jusqu'à l'annulation totale de ces vibrations, par imposition à ce châssis de contre-vibrations appropriées, c'est-à-dire dont la fréquence et l'amplitude sont identiques à celles des vibrations normalement transmises depuis le moteur, mais de phase opposée.

A cet effet, on prévoit :
- d'une part, des moyens commandés électriquement propres à imposer au clapet des contre-vibrations artificielles,
- d'autre part, des moyens d'asservissement permettant de détecter à chaque instant les déplacements réels du clapet et d'engendrer à chaque instant, en fonction des informations ainsi recueillies sur ces déplacements réels, des signaux électriques de correction qui sont introduits dans les moyens de commande électrique.

Ces moyens de commande électrique des contre-vibrations du clapet peuvent être de toute nature désirable et mettre en oeuvre des phénomènes magnétiques, piézo-électriques ou autres.

Dans le mode de réalisation schématisé sur la figure 1,
- on prévoit entre le clapet 8 et son support une bague déformable 15 propre à guider les débattements dudit clapet en rendant ceux-ci possibles exclusivement en translation et parallèlement à la direction de l'axe X ou direction "axiale" et non selon les directions radiales perpendiculaires à cet axe ou en basculement autour d'un axe transversal,
- on constitue en un matériau ferromagnétique au moins la rondelle constituant la portion périphérique 9 dudit clapet 8,
- on isole cette rondelle 9 du liquide par au moins un joint d'étanchéité 16,
- on prévoit dans l'anneau 3, de part et d'autre de la rondelle 9, deux bobines 17 et 18 dont les excitations électriques se traduisent par l'application de forces axiales de sens contraires sur ladite rondelle 9,
- et on prévoit une chaîne d'asservissement des excitations de ces deux bobines, comprenant un capteur 19 des déplacements du clapet 8, un circuit électronique 20 de traitement des données recueillies par le capteur 19 et deux amplificateurs 21 et 22 interposés respectivement entre le circuit 20 et les bobines 17 et 18.

La bague de guidage 15 est avantageusement constituée par une bague en élastomère peu compressible radialement, mais très facilement déformable en direction axiale, et travaillant au cisaillement ou par un soufflet métallique travaillant à la flexion tel que celui désigné par la référence 15' dans la variante de la figure 4.

Le joint d'étanchéité 16 doit opposer une résistance négligeable aux débattements axiaux du clapet 8 et pourrait être dans certains cas constitué par la bague de guidage 15 elle-même si sa position lui permet d'empêcher le liquide de pénétrer dans la gorge 11.

Les bobines 17 et 18 travaillent à la façon d'un moteur à réluctance variable, engendrant sur le clapet des forces élevées orientées alternativement dans les deux sens : elles peuvent être logées dans une carcasse ou culasse en matériau ferromagnétique faisant partie de leur support commun ou constituant celui-ci.

Le capteur 19 est constitué de toute manière désirable, travaillant par exemple sur le principe LVDT ("Linear Variation Differential Transformer") ou étant d'un type inductif, capacitif ou à courants de Foucault.

L'asservissement réalisé par la chaîne est prévu de façon telle que, s'il est utilisé isolément, il immobilise pratiquement le clapet 8, toute tentative de déplacement axial de celui-ci dans un sens donné se traduisant instantanément par l'application sur lui d'une force antagoniste contraire tendant à interdire ce déplacement.

C'est sur le clapet ainsi asservi en position que l'on vient appliquer artificiellement une vibration correctrice en utilisant les bobines 17 et 18 ci-dessus ainsi que leurs circuits d'attaque 20 à 22.

Plus précisément, on prévoit sur le circuit électronique 20 une entrée spéciale E adaptée à la réception des signaux électriques représentatifs d'une telle vibration correctrice et on élabore ces signaux électriques dans un circuit atténuateur approprié 23.

Ce circuit atténuateur 23 reçoit des informations provenant respectivement d'un capteur de vibrations 24 monté sur l'embase 1 et donc apte à capter les vibrations imposées à cette embase par le moteur 13 et d'un capteur de vibrations 25 monté sur l'anneau 3 et donc apte à capter les vibrations résiduelles qui apparaissent sur le châssis 14 tant que le réglage optimum de l'ensemble n'est pas obtenu.

Dans certains cas, on établit en outre une liaison 26 entre le moteur 13 lui-même et le circuit atténuateur 23, par exemple à des fins de synchronisation.

Sur la figure 2, on a schématisé en 27 un circuit soustracteur disposé sur l'entrée E et recevant à la fois les signaux électriques élaborés par le capteur 19 et ceux élaborés par le circuit atténuateur 23, la différence de ces signaux étant faite à ce niveau avant l'application des signaux résultants sur le circuit 20.

Cette seconde chaîne d'asservissement 23-26 permet d'appliquer sur le clapet 8 des vibrations imposées dont les caractéristiques (fréquence, amplitude, phase) sont pratiquement identiques à celles des vibrations naturelles du clapet qui auraient lieu en l'absence des deux chaînes d'asservissement.

On obtient dans ce cas des effets d'amortissement du même genre que ceux obtenus par lesdites vibrations naturelles.

Mais ici ces vibrations sont imposées sur le clapet 8 en maintenant sa position moyenne au milieu de la largeur axiale de la gorge 11, de sorte qu'il ne risque plus de venir buter contre les faces en regard de ladite gorge, l'amplitude desdites vibrations étant inférieure au jeu 10, et par exemple de l'ordre de 0,1 mm si ce jeu est de 0,5 mm : en particulier, il n'y a donc plus de risque que ces vibrations utiles cessent au rythme d'éventuelles oscillations à basse fréquence et grande amplitude ainsi qu'il a été décrit ci-dessus.

Cela dit, la seconde chaîne permet d'appliquer sur le clapet 8 des vibrations encore plus correctrices que les vibrations naturelles précédentes, en particulier en conférant à ces vibrations correctrices des amplitudes supérieures à celles desdites vibrations naturelles, mais toujours inférieures bien entendu au jeu 10.

L'ensemble permet alors d'engendrer une "atténuation active" des vibrations à amortir, ce qui permet à la limite de supprimer intégralement celles-ci au niveau du châssis 14.

Sur la figure 3, on a schématisé une variante du support schématisé sur la figure 1, variante pour laquelle les éléments identiques ou comparables à ceux précédemment décrits ont été affectés des mêmes références que précédemment.

Cette variante diffère essentiellement de la précédente par les points suivants :
1/ Au lieu d'être interposé entre les deux chambres de liquide A et B, le clapet 8 est ici interposé entre la première chambre de liquide A et une troisième chambre C qui est dépourvue de liquide et avantageusement mise à l'air libre à travers au moins un orifice approprié 28.
   Cette mesure est de nature à augmenter la sensibilité du dispositif, car alors seule l'une des deux faces du clapet 8 est en contact avec du liquide, ce qui facilite le contrôle de ses débattements.
2/ La gorge 11 est alors évidée dans un bloc annulaire ferromagnétique 29 indépendant de l'anneau 3 et la seconde chambre de liquide B est reportée à la périphérie de ce bloc 29, cette seconde chambre B étant alors annulaire et délimitée extérieurement par l'anneau 3, intérieurement par le bloc 29 et, entre ces deux pièces rigides, d'une part, par une entretoise annulaire 30 constituée en un matériau élastique et, d'autre part, par une membrane annulaire mince et flexible constitutive du soufflet 7, et le passage étranglé 12 étant ici un canal évidé dans ledit bloc 29.
   Une telle construction permet de filtrer les hautes fréquences par la simple inertie du bloc 8, lequel est relativement pesant et se trouve suspendu entre les deux entroises en élastomère 6 et 30.
3/ Au lieu de présenter la forme d'un disque plat, comme précédemment, le clapet 8 présente ici la forme d'un pot cylindrique à fond plat ceinturé à mihauteur par la collerette radiale externe 9 en matériau ferromagnétique logée avec jeu dans la gorge annulaire 11.

Le guidage de ce clapet 8 dans le bloc 29 est assuré à l'aide de deux bagues 15 adhérées respectivement sur ces deux pièces et disposées axialement de part et d'autre de la collerette 9, bagues peu déformables radialement, mais offrant une résistance négligeable à la déformation par cisaillement selon la direction axiale.

L'une de ces deux bagues sert en même temps de joint d'étanchéité 16 empêchant que le liquide contenu dans la chambre A puisse accéder à la collerette 9.

Le capteur 19 est ici disposé axialement au centre du support, à l'intérieur du pot constitutif du clapet 8 et il en est de même du capteur 25.

Selon une variante, l'entretoise annulaire 30 ci-dessus est constituée par une pièce rigide solidarisant entre eux le bloc 29 et l'anneau 3.

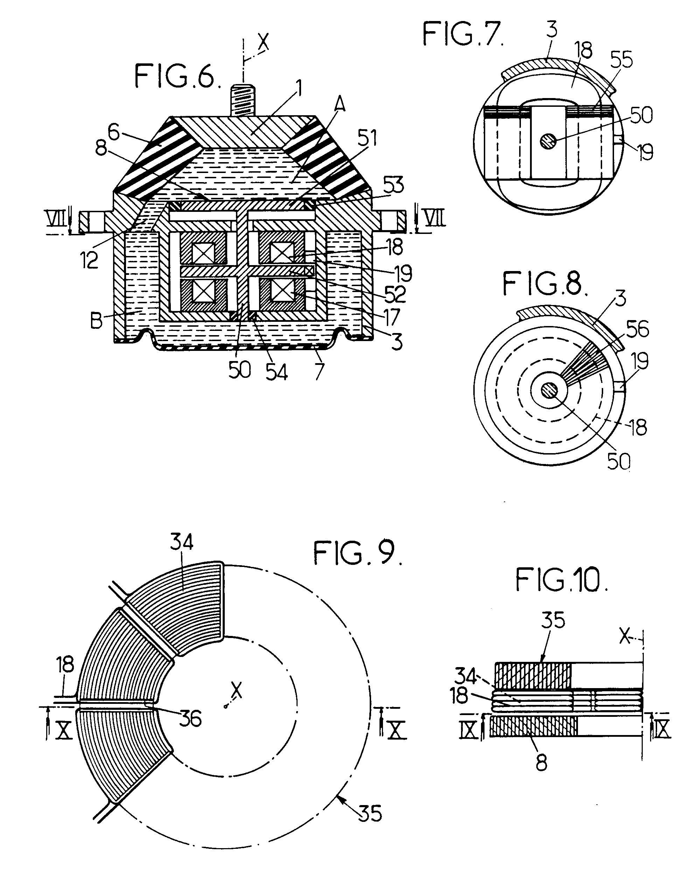

Selon une autre variante, le bord périphérique du clapet 8 est prolongé axialement, de préférence de part et d'autre de celui-ci, par un rebord 31 (figure 5) présentant une relativement grande dimension axiale, la bague 15 de guidage du clapet 8 comprenant alors au moins deux portions annulaires interposées radialement entre le fond 32 de la gorge 11 et le flanc 33 des deux extrémités axiales dudit rebord : cette construction améliore le guidage du clapet et en particulier renforce sa résistance aux basculements autour d'axes transversaux.

Selon encore une autre variante, la portion ferromagnétique 9 constitutive du clapet 8, et les bobines 17 et 18 qui l'encadrent, sont disposées à proximité de l'axe X, la portion du clapet mise en contact avec le liquide étant alors disposée à la périphérie de ce clapet.

Selon la variante schématisée sur la figure 6, le clapet 8 se présente sous la forme d'une table comprenant un pied central unique 50 et deux plateaux circulaires parallèles 51 et 52.

La face supérieure du plateau supérieur 51 est mise en contact avec le liquide présent dans la chambre de travail A et le dessous du pied 50 est mis en contact avec le liquide de la chambre de compensation B.

Deux joints annulaires étroits en élastomère 53 et 54 relient respectivement de façon étanche au corps rigide constitutif de l'armature 3 le pourtour du plateau supérieur 51 et la base du pied 50 et assurent le guidage en translation axiale de l'ensemble du clapet.

La périphérie annulaire du plateau intermédiaire 52, qui constitue l'élément ferromagnétique du clapet, est interposée axialement entre les deux bobines fixes 17 et 18 portées par le corps 3.

On voit que ces deux bobines sont traversées par le pied 50 et que l'une d'elles est interposée axialement entre les deux plateaux 51 et 52.

Selon une variante, le pied 50 et le joint 54 peuvent être totalement contenus à l'intérieur d'un boîtier étanche formé par l'armature 3, le plateau 51 et le joint 53, sans que la base de ce pied affleure dans la chambre B.

Selon une disposition avantageuse, on adopte pour le circuit magnétique associé aux bobines 17 et 18 une construction feuilletée qui permet de réduire considérablement les échauffements et pertes dans le fer.

A cet effet par exemple on constitue le circuit magnétique associé à chaque bobine par au moins un tunnel ouvert vers l'entrefer et constitué par empilement de plaquettes identiques en matériau ferromagnétique isolées électriquement entre elles et présentant la forme d'un U épais :
- dans le mode de réalisation de la figure 7, chacun desdits circuits comprend deux tels tunnels rectilignes, parallèles et identiques, constitués chacun par empilement jointif de telles plaquettes 55, l'enroulement de fil constitutif de la bobine 17 ou 18 présentant alors la forme d'un anneau étiré transversalement,
- dans le mode de réalisation de la figure 8, chacun des circuits comprend un seul tunnel circulaire d'axe X et les différentes plaquettes 56 s'étendent parallèlement à l'axe X et sont disposées radialement en étoile à partir de cet axe, les intervalles en forme de coins alors formés entre les plaquettes successives pouvant être comblés par un matériau amagnétique.

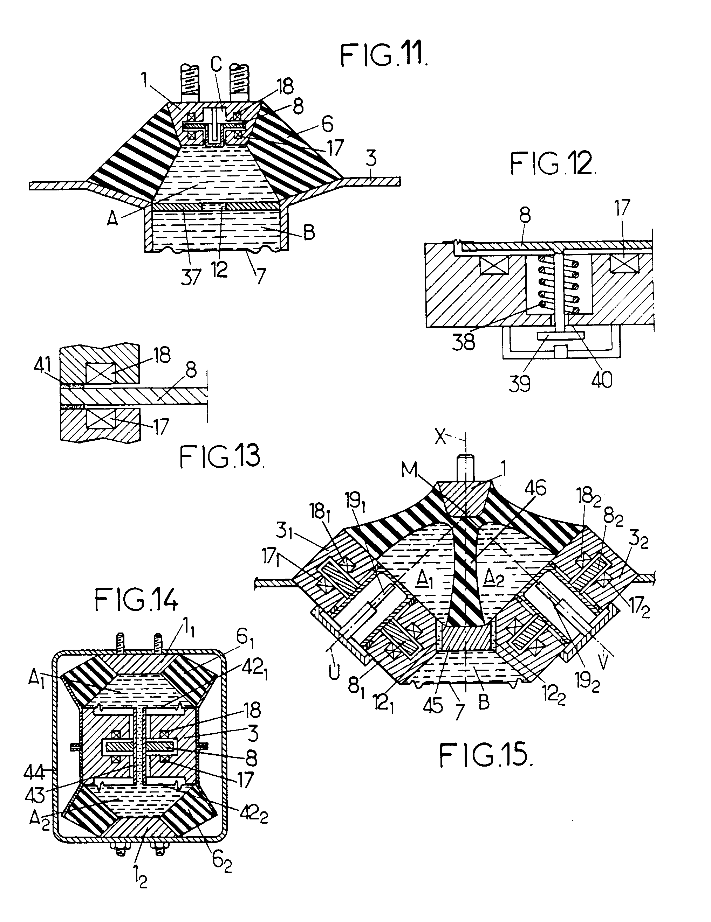

Dans la variante illustrée sur les figures 9 et 10, chaque bobine 17,18 est constituée par une couronne d'axe X de noyaux axiaux 34.

Ces noyaux 34 sont formés de la façon suivante.

On commence par fabriquer une galette annulaire plate 35 en enroulant une bande en matériau magnétique autour de l'axe X.

Puis on évide l'une des faces planes de cette galette par des gorges radiales 36, ce qui délimite entre ces gorges des créneaux plats en forme de secteurs circulaires constituant les noyaux 34 : c'est autour de ces noyaux que sont bobinés les enroulements de fil électrique constituant les bobines 17 et 18.

Les portions annulaires non interrompues de la galette 35 servent à refermer les circuits magnétiques.

Les différents enroulements sont de préférence branchés électriquement en parallèle, ce qui permet de bien répartir les efforts magnétiques appliqués sur le clapet sur toute la périphérie de celui-ci et donc de simplifier le système de guidage de ce clapet.

L'ensemble de la galette crénelée et de ces enroulements est enrobé dans un carter (non représenté) qui est constitué en un matériau amagnétique tel qu'une matière plastique moulée.

Le clapet 8 est également feuilleté, étant notamment constitué par une bande magnétique enroulée sur elle-même autour de l'axe X, ainsi que visible sur la figure 10, ou par des plaquettes en étoile du genre des plaquettes 56 de la figure 8.

Dans les modes de réalisation habituels, c'est plutôt le plot 1 central que l'armature annulaire 3 qui est relié au moteur du véhicule.

Les vibrations à amortir préférablement étant en général celles engendrées par le fonctionnement dudit moteur, c'est donc par le plot 1 que parviennent ces vibrations au support antivibratoire considéré et c'est donc surtout sur l'armature 3 que l'on cherche à supprimer les vibrations.

Dans les modes de réalisation précédemment envisagés, pour lesquels le clapet 8 est monté sur cette armature 3, c'est indirectement cette dernière qui peut être appelée à encaisser en partie les "contre-vibrations" d'atténuation engendrées par les bobines 17 et 18.

Selon un perfectionnement de la présente invention, le clapet 8 ainsi que ses bobines d'excitation sont directement montés sur le plot 1, comme visible sur la figure 11.

La transmission des vibrations du plot 1 à l'armature 3 n'est pas modifiée, mais cette variante permet d'éviter la création, sur l'armature 3, de vibrations parasites indésirables qui peuvent accompagner certaines contre-vibrations d'atténuation, en particulier lors des modifications de la fréquence de fonctionnement du dispositif.

Dans ce cas, le passage étranglé 12 est évidé, non plus dans le clapet 8, mais dans une cloison intermédiaire rigide 37 solidarisée avec l'armature 3 et la face, du clapet 8, qui n'est pas orientée vers la chambre A, délimite une chambre à air C qui peut être mise à l'air libre.

Selon un autre perfectionnement, l'une des deux bobines électriques susceptibles d'exercer des efforts de traction ou de répulsion axiale sur le clapet 8 est remplacée par un ressort de rappel tel que le ressort hélicoïdal de compression 38 visible sur la figure 12.

Cette variante présente, outre l'avantage de diviser par deux le nombre des bobines et de leurs conducteurs d'alimentation électrique, celui de pouvoir mettre en contact avec le liquide amortisseur une plus grande partie de la surface du clapet, ce qui améliore l'efficacité, pour un diamètre donné du clapet.

Au cours du fonctionnement du support équipé d'un tel ressort 38, la bobine unique restante 17 est excitée électriquement en permanence de façon telle que le clapet 8 au repos se trouve en une position moyenne : c'est autour de cette position moyenne qu'il est conduit à vibrer lors des fonctionnements du support.

Le montage est tel que, lorsque l'alimentation électrique de la bobine unique 17 est coupée, le déplacement du clapet 8 dû à la détente du ressort 38 soit limité par appui d'une butée appropriée 39 liée à ce clapet contre une portée fixe appropriée 40 du dispositif.

Selon encore un autre perfectionnement, le joint souple 15 prévu pour guider les déplacements rectilignes du clapet 8 est constitué par au moins une bague 41 (figure 13) en matériau alvéolaire interposée entre un bord dudit clapet et la pièce rigide en regard.

Si la porosité de ce matériau alvéolaire est fermée, chaque bague 41 peut également servir de joint d'étanchéité à la façon de ceux désignés par la référence 16 ci-dessus.

Selon un autre perfectionnement schématisé sur la figure 14, les deux chambres A1, A2, du dispositif sont d'un même type, dit "de travail" : elles sont toutes deux délimitées par un plot central 1₁, 1₂, par une paroi élastique annulaire 6₁, 6₂ offrant une bonne résistance à la compression axiale et de préférence tronconique, par une portion d'une armature annulaire centrale 3 et par un "clapet" du genre de ceux désignés par la référence 8 ci-dessus ou plus précisément par une membrane étanche 42₁, 42₂ dont la périphérie est fixée de façon étanche sur l'armature 3 et dont le centre, perforé, est fixé sur une extrémité d'un tube rigide central 43 traversant un clapet 8 et solidaire de ce clapet.

Les deux plots centraux 1₁, 1₂ sont solidarisés mutuellement par une ossature rigide appropriée telle qu'un arceau ou étrier 44.

Les deux chambres A₁ et A₂ communiquent entre elles par le tube 43 qui définit le "passage étranglé" du support considéré.

Comme visible sur la figure 14, ledit support est de préférence symétrique par rapport à un plan transversal médian.

Cette variante présente l'avantage d'une excellente efficacité : en effet, les deux faces du clapet ou plus précisément les faces, des deux membranes 42₁, 42₂, qui sont les plus éloignées du clapet 8, sont en contact avec le liquide contenu dans une chambre de travail (A₁, A₂) et peuvent donc contribuer à l'amortissement désiré.

Dans encore un mode de réalisation illustré sur la figure 15, le support comprend comme précédemment un plot central 1 d'axe X.

Mais l'armature annulaire unique 3 du mode de réalisation de la figure 1 est ici remplacée par deux armatures annulaires 3₁, 3₂ qui sont de révolution respectivement autour de deux axes U et V coupant tous les deux l'axe X en un même point M et symétriques l'un de l'autre par rapport à cet axe X, l'angle formé entre les deux axes U et V étant de préférence égal à 90 degrés.

Les deux armatures 3₁ et 3₂ sont solidarisées entre elles par un pontet 45 et chacune des deux armatures 3₁ et 3₂ est associée à un ensemble clapet (8₁,8₂)-bobines électriques (17₁,18₁ ; 17₂,18₂) du même type que ceux précédemment décrits.

Les chambres de travail coagissant avec chacun de ces deux ensembles sont également dédoublées (A1, A2) par un voile intérieur 46 faisant partie de la paroi 6 et communiquent chacune à travers un passage étranglé qui lui est affecté (12₁, 12₂) avec une même chambre de compensation B délimitée d'une part par une portion de chacune des armatures 3₁ et 3₂ et d'autre part par un soufflet 7.

On voit encore sur la figure 15 en 19₁, 19₂, des capteurs propres à détecter les déplacements des deux clapets 8₁ et 8₂.

Mais, pour simplifier, on n'a pas donné de réfé rence sur cette figure 15 aux différents organes de guidage et d'étanchéité, qui sont cependant, bien entendu, prévus comme précédemment.

Avec un tel montage bidirectionnel, une oscillation appliquée sur le plot 1 selon la direction de l'axe X est amortie à moitié par respectivement chacun des deux ensembles établis respectivement autour des deux axes U et V et, pour atténuer au maximum les vibrations résultantes des clapets 8₁, 8₂, il convient d'appliquer respectivement sur les deux paires de bobines qui contrôlent les déplacements de ces deux clapets des tensions alternatives identiques.

Si, au contraire les deux tensions appliquées respectivement sur ces deux paires de bobines sont en opposition de phase, l'effort d'atténuation résultant qui est exercé sur l'ensemble des deux armatures annulaires 3₁, 3₂ par rapport au plot 1 est orienté selon une direction perpendiculaire à l'axe X.

On dispose ainsi d'un moyen particulièrement simple pour assurer à volonté l'amortissement d'oscillations exercées selon deux directions perpendiculaires entre elles.

En suite de quoi, et quel que soit le mode de réalisation adopté, on dispose finalement de supports antivibratoires hydrauliques dont la constitution, le fonctionnement et les avantages résultent suffisamment de ce qui précède.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes selon la revendication 1, notamment:
- celles où le dispositif antivibratoire considéré serait un manchon travaillant essentiellement selon une direction diamétrale et pour lequel les deux armatures rigides seraient tubulaires, s'entourant l'une l'autre et de préférence de révolution et coaxiales au moins sous charge,
- et celles où les contre-vibrations artificielles imposées au clapet seraient engendrées autrement que par des bobines électriques coagissant avec un élément ferromagnétique constitutif de ce clapet, ces contre-vibrations pouvant par exemple être engendrées par excitation électrique d'un enroulement porté par le clapet lui-même et noyé dans un champ magnétique qui peut être engendré par un aimant permanent fixe.

## Revendications

1. Dispositif antivibratoire hydraulique destiné à être interposé entre deux éléments rigides (13,14), comportant deux armatures rigides (1,3) solidarisables respectivement avec les deux éléments rigides à réunir ; une structure d'entretoisement en élastomère (6,7,30) reliant entre elles les deux armatures et formant au moins en partie avec celles-ci deux chambres étanches (A,B) ; un passage étranglé (12) faisant communiquer en permanence les deux chambres entre elles ; une masse de liquide remplissant les deux chambres et le passage étranglé ; un clapet rigide (8) délimitant en partie, directement ou par l'intermédiaire d'une pièce rigidement liée à lui, l'une des deux chambres (A) et monté de façon à pouvoir se déplacer avec une amplitude de débattement limitée ; et un organe excitateur électrique (17,18) propre à appliquer des forces alternatives sur ce clapet, ledit clapet (8) étant guidé par au moins une bague déformable (15) de façon à ne pouvoir se déplacer qu'en translation selon une direction, et le jeu (10) correspondant au déplacement limité dudit clapet (8) et formé entre l'organe excitateur et cette portion du clapet qui est disposée à proximité immédiate dudit organe excitateur (17,18) et de ce fait sensible à l'excitation électrique, étant isolé du liquide amortisseur par au moins un joint annulaire étanche (16), caractérisé en ce que qu'il est associé à une seule première chaîne asservissant l'alimentation électrique de l'organe excitateur (17,18) aux déplacements du clapet lui-même de façon telle que l'excitation due à cette seule première chaîne ait pour effet de réduire, voire d'annuler ces déplacements, ladite chaîne comprenant à cet effet un capteur (19) desdits déplacements disposé à proximité immédiate dudit clapet.

2. Dispositif antivibratoire selon la revendication 1, caractérisé en ce que le clapet (8) est constitué au moins en partie par un élément ferromagnétique feuilleté (9) et en ce que l'organe excitateur électrique est constitué par au moins une bobine électrique fixe (17,18) associée à un circuit magnétique fixe feuilleté qui est séparé dudit élément par au moins un entrefer (10).

3. Dispositif antivibratoire selon la revendication 2, caractérisé en ce que le circuit magnétique feuilleté est de révolution autour d'un axe X et en ce que chaque bobine est constituée par une couronne d'axe X de bobines axiales élémentaires dont les noyaux magnétiques (34) sont constitués à partir de feuilles en matériau magnétique parallèles à l'axe X enroulées cylindriquement autour de cet axe, la galette annulaire (35) résultante étant découpée par des saignées radiales (36) qui laissent subsister entre elles des créneaux plats en forme de secteurs circulaires constitutifs desdits noyaux.

4. Dispositif antivibratoire selon la revendication 2, pour lequel l'élément ferromagnétique se présente sous la forme d'un disque plat, caractérisé en ce que le circuit magnétique feuilleté est constitué par des tunnels rectilignes ouverts vers le disque et composés par empilage de tôles identiques (55) en forme de U épais.

5. Dispositif antivibratoire selon la revendication 2, pour lequel l'élément ferromagnétique se présente sous la forme d'un disque plat d'axe X, caractérisé en ce que le circuit magnétique feuilleté est constitué par un tunnel circulaire d'axe X ouvert vers le disque et composé par des tôles identiques (56) en forme de U épais parallèles à l'axe X et disposées en étoile autour de cet axe.

6. Dispositif antivibratoire selon l'une quelconque des revendications 2 à 5, caractérisé en ce que le clapet se présente sous la forme générale d'une table à un pied central unique (50) et deux plateaux circulaires parallèles (51,52), la face supérieure du plateau supérieur (51) délimitant en partie l'une des deux chambres (A), au moins la portion annulaire extérieure du plateau intermédiaire (52) constituant l'élément ferromagnétique.

7. Dispositif antivibratoire selon la revendication 1, caractérisé en ce que l'organe excitateur électrique est constitué par un enroulement de fil électrique porté par le clapet (8), et en ce que des moyens sont prévus pour appliquer un champ magnétique permanent sur cet enroulement.

8. Dispositif antivibratoire selon l'une quelconque des précédentes revendications, caractérisé en ce qu'il comprend en outre deux capteurs (24,25) propres à capter respectivement les vibrations des deux armatures rigides (1,3) et une seconde chaîne d'asservissement (23-26) propre à élaborer, à partir des données recueillies par ces deux capteurs et éventuellement de données supplémentaires provenant notamment d'un moteur de véhicule donnant naissance aux vibrations à amortir, des signaux électriques d'alimentation de l'organe excitateur électrique, signaux propres à imposer au clapet (8) théoriquement stabilisé par la première chaîne d'asservissement (17-22), des vibrations artificielles propres à annuler les vibrations apparaissant sur l'armature rigide à amortir (3).

9. Dispositif antivibratoire selon l'une quelconque des précédentes revendications, caractérisé en ce que le clapet (8) est interposé entre l'une des deux chambres remplies de liquide (A) et une troisième chambre (C) dépourvue de liquide et éventuellement mise à l'air libre.

10. Dispositif antivibratoire selon la revendication 9, caractérisé en ce que le clapet (8) est monté dans une carcasse rigide (29) qui est reliée aux deux armatures rigides par respectivement deux portions (6,30) de la structure d'entretoisement en élastomère.

11. Dispositif antivibratoire selon l'une quelconque des précédentes revendications, caractérisé en ce que le clapet (8) et l'organe excitateur qui lui est associé sont montés sur celui (1), des deux éléments rigides, d'où parviennent les vibrations à amortir.

12. Dispositif antivibratoire selon l'une quelconque des précédentes revendications, caractérisé en ce que l'organe excitateur est agencé de façon à solliciter le clapet (8) dans un sens et en ce qu'un ressort de rappel (38) est interposé, directement ou non, entre ce clapet et l'un des deux éléments rigides pour solliciter ledit clapet en sens inverse.

13. Dispositif antivibratoire selon l'une quelconque des précédentes revendications, caractérisé en ce que le clapet (8) est guidé par au moins une garniture annulaire (41) constituée en un matériau alvéolaire, de préférence à porosité fermée.

14. Dispositif antivibratoire selon l'une quelconque des précédentes revendications, caractérisé en ce qu'il est d'un type à double effet en ce sens que ses deux chambres (A,B) sont disposées de part et d'autre du clapet et sont toutes les deux du type d'une chambre de travail, c'est-à-dire essentiellement délimitées chacune par une paroi élastique annulaire (6₁,6₂) offrant une bonne résistance à la compression axiale et par des portions, des deux éléments rigides (1₁,1₂ ; 3), entre lesquelles cette paroi est interposée.

15. Dispositif antivibratoire selon l'une quelconque des précédentes revendications, caractérisé en ce qu'il comprend, associés à un même élément rigide (3) et symétriques l'un de l'autre par rapport à l'axe commun aux deux éléments rigides (1,3), deux équipages complets composés par un clapet (8₁,8₂) et par l'organe excitateur qui lui est associé, ces équipages étant montés de façon telle que les axes (U,V) des deux clapets se coupent et soient inclinés de préférence l'un sur l'autre d'un angle de l'ordre de 90°.

## Claims

1. Hydraulic antivibratory device for insertion between two rigid elements (13, 14) comprising two rigid frames (1, 3) which can be firmly secured respectively to the two rigid elements to be joined together; an elastomer spacer structure (6, 7, 30) connecting the two frames together and forming at least partially therewith two sealed chambers (A, B); a restricted passage (12) causing the two chambers to communicate permanently with each other; a liquid mass filling the two chambers and the restricted passage; a rigid valve (8) partially defining, directly or through a piece rigidly connected to it, one of the two chambers (A) and mounted so as to be able to move with a limited amplitude of movement; and an electric energizing member (17, 18) adapted to apply alternating forces on this valve, said valve (8) being guided by at least one deformable ring (15) so as to be able to move only in translation in one direction, and the space (10), which corresponds to the limited displacement of said valve and which is formed between the energizing member and this portion of the valve which is disposed in the immediate proximity of said energizing member (17,18) and is therefor sensitive to the energizing field, being isolated from the damping liquid by at least one annular seal (16), characterized in that it is associated with a single first chain making the electric power supply of the energizing member (17,18) dependent on the movements of the valve itself so that energization due to this first chain alone results in reducing, even cancelling out, such movements, said chain comprising for this purpose a sensor (19) detecting said movements disposed in the immediate vicinity of said valve.

2. Antivibratory device according to claim 1, characterized in that the valve (8) is formed at least partially by a laminate ferromagnetic element (9) and in that the electric energizing member is formed by at least one fixed electric coil (17, 18) associated with a fixed laminate magnetic circuit which is separated from said element by at least one air gap (10).

3. Antivibratory device according to claim 2, characterized in that the laminate magnetic circuit is of revolution about an axis X and in that each coil is formed by a crown with axis X of elementary axial coils whose magnetic cores (34) are formed from magnetic material foils parallel to axis X and wound cylindrically about this axis, the resulting annular disc (35) being cut by radial grooves (36) which leave therebetween flat ribs in the form of circular sectors forming said cores.

4. Antivibratory device according to claim 2, in which the ferromagnetic element is in the form of a flat disc, characterized in that the laminate magnetic circuit is formed by rectilinear tunnels open towards the disc and formed by stacking identical metal sheets (55) in the form of a thick U.

5. Antivibratory device according to claim 2, in which the ferromagnetic element is in the form of a flat disc with axis X, characterized in that the laminate magnetic circuit is formed by a circular tunnel with axis X open towards the disc and composed of identical metal sheets (56) in the form of a thick U parallel to axis X and disposed star fashion about this axis.

6. Antivibratory device according to any one of the claims 2 to 5, characterized in that the valve is in the general form of a table with a single central leg (50) and two parallel circular plates (51, 52), the upper face of the upper plate (51) partially defining one of the two chambers (A), at least the annular external portion of the intermediate plate (52) forming the ferromagnetic element.

7. Antivibratory device according to claim 1, characterized in that the electric energizing member is formed by an electric wire winding carried by the valve (8) and in that means are provided for applying a permanent magnetic field to this winding.

8. Antivibratory device according to any one of the preceding claims, characterized in that it further comprises two sensors (24, 25) adapted for detecting respectively the vibrations of the two rigid frames (1, 3) and a second automatic control chain (23-26) adapted for delivering, from the data collected by these two sensors and possibly from additional data coming more particularly from a vehicle engine giving rise to the vibrations to be damped, electric signals for supplying the electric energizing member with power, which signals are adapted to impose on the valve (8), theoretically stabilized by the first automatic control chain (17-22), artificial vibrations for cancelling out the vibrations appearing on the rigid frame (3) to be damped.

9. Antivibratory device according to any one of the preceding claims, characterized in that the valve (8) is inserted between one of the two liquid filled chambers (A) and a third chamber without liquid (C) and possibly vented.

10. Antivibratory device according to claim 9, characterized in that the valve (8) is mounted in a rigid carcass (29) which is connected to the two rigid frames by respectively two portions (6, 30) of the elastomer spacer structure.

11. Antivibratory device according to any one of the preceding claims, characterized in that the valve (8) and the energizing member which is associated therewith are mounted on that one (1) of the two rigid elements from where the vibrations to be damped arrive.

12. Antivibratory device according to any one of the preceding claims, characterized in that the energizing member is adapted so as to urge the valve (8) in one direction and in that a return spring (38) is inserted, directly or not, between this valve and one of the two rigid elements for urging said valve in the opposite direction.

13. Antivibratory device according to any one of the preceding claims, characterized in that the valve (8) is guided by at least one annular packing (41) made from a cellular material, preferably with closed pores.

14. Antivibratory device according to any one of the preceding claims, characterized in that it is of double acting type in that its two chambers (A, B) are disposed on each side of the valve and are both of the working chamber type, i.e. each essentially defined by a resilient annular wall (6₁, 6₂) offering good resistance to axial compression and by portions of the two rigid elements (1₁, 1₂ ; 3), between which this wall is inserted.

15. Antivibratory device according to any one of the preceding claims, characterized in that it comprises, associated with the same rigid element (3) and symmetrical with each other with respect to the axis common to the two ridig elements (1, 3), two complete assemblies formed by a valve (8₁, 8₂) and the energizing member which is associated therewith, these assemblies being mounted so that the axes (U, V) of the two valves intersect and are preferably inclined with respect to each other by an angle of about 90°.

## Patentansprüche

1. Hydraulische Antischwingungsvorrichtung zum Einbau zwischen zwei starren Elementen (13, 14), die aus folgenden Teilen besteht: zwei starren Armaturen (1, 3), die jeweils an den beiden starren, miteinander zu verbindenden Elementen anbringbar sind, einer Versteifungsstruktur (6, 7, 30) aus elastomerem Material, die die beiden Armaturen miteinander verbindet und wenigstens teilweise mit diesen zwei dichte Kammern (A, B) bildet, einem verengten Durchgang (12), der die beiden Kammern dauernd untereinander verbindet, einer flüssigen Masse, die die beiden Kammern und den verengten Durchgang ausfüllt, einem starren Ventil (8), das teilweise direkt oder durch Einfügen eines mit ihm verbundenen starren Teils die eine der beiden Kammern (A) begrenzt und so befestigt ist, daß es sich mit einer begrenzten Ausschlagamplitude verschieben kann, und einem elektrischen Erreger (17, 18), der wechselwirkende Kräfte an dieses Ventil anlegen kann, wobei das Ventil (8) durch wenigstens einen deformierbaren Ring (15) so geführt wird, daß es nur eine Translationsbewegung in einer Richtung ausführen kann, und das Spiel, das der begrenzten Verschiebung dieses Ventils (8) entspricht und zwischen dem Erreger und demjenigen Abschnitt des Ventils gebildet ist, der in unmittelbarer Nähe des Erregers (17, 18) angeordnet und aus diesem Grunde für die elektrische Erregung empfindlich ist, durch wenigstens eine dichte Ringdichtung (16) von der Dämpfungsflüssigkeit isoliert ist, dadurch gekennzeichnet, daß die Vorrichtung mit einer einzigen ersten Kette verbunden ist, die die elektrische Speisung des Erregers (17, 18) für Verschiebungen des Ventils selbst so steuert, daß die auf dieser einzigen ersten Kette beruhende Erregung bewirkt, daß diese Verschiebungen verringert, sogar annuliert werden, wobei die Kette zu diesem Zweck einen Meßfühler (19) für die Verschiebungen enthält, der in unmittelbarer Nähe des Ventils angeordnet ist.

2. Hydraulische Antischwingungsvorrichtung nach Anspruch 1, dadurch gekennzeichnet, daß das Ventil (8) wenigstens teilweise aus einem ferromagnetischen, lamellierten Element (9) besteht und daß der elektrische Erreger wenigstens eine feststehende elektrische Spule (17, 18) enthält, die mit einem feststehenden, lamellierten Magnetkreis verbunden ist, der von dem Element durch wenigstens einen Luftspalt (10) getrennt ist.

3. Antischwingungsvorrichtung nach Anspruch 2, dadurch gekennzeichnet, daß der lamellierte Magnetkreis die Form eines Umdrehungszylinders mit einer Achse X hat und daß jede Spule aus einem Kranz von axialen Elementarwicklungen mit der Achse X besteht, deren Magnetkerne (34) ausgehend von zu der Achse X parallelen Folien aus magnetischem Material gebildet sind, die zylindrisch um diese Achse gewickelt sind, wobei die sich ergebende ringförmige Scheibe (35) durch radiale Spalte (36) eingeschnitten ist, die zwischen sich flache Abschnitte in Form von Kreisausschnitten stehenlassen, die die Kerne bilden.

4. Hydraulische Antischwingungsvorrichtung nach Anspruch 2, bei der das ferromagnetische Element die Form einer flachen Scheibe hat, dadurch gekennzeichnet, daß der lamellierte Magnetkreis aus rechteckigen Kanälen besteht, die zu der Scheibe hin offen sind und durch lagenweise Anordnung identischer Bleche (55), die die Form eines dicken U haben, gebildet sind.

5. Hydraulische Antischwingungsvorrichtung nach Anspruch 2, bei dem das ferromagnetische Element die Form einer flachen Scheibe mit der Achse X hat, dadurch gekennzeichnet, daß der lamellierte Magnetkreis aus einem kreisförmigen zu der Scheibe hin offenen Kanal mit der Achse X besteht und aus identischen Blechen (56) gebildet ist, die die Form eines dicken U haben, und parallel zu der Achse X und sternförmig um diese Achse angeordnet sind.

6. Hydraulische Antischwingungsvorrichtung nach einem der Ansprüche 2 bis 5, dadurch gekennzeichnet, daß das Ventil die allgemeine Form eines Tisches mit einem einzigen mittleren Fuß (50) und zwei parallelen runden Platten (51, 52) hat, wobei die obere Fläche der oberen Platte (51) teilweise eine der beiden Kammern (A) begrenzt und wenigstens der äußere ringförmige Abschnitt der dazwischenliegenden Platte (52) das ferromagnetische Element bildet.

7. Hydraulische Antischwingungsvorrichtung nach Anspruch 1, dadurch gekennzeichnet, daß der elektrische Erreger aus einer elektrischen Drahtwicklung besteht, die durch das Ventil (8) gehalten wird, und daß Einrichtungen vorgesehen sind, um ein permanentes Magnetfeld an die Wicklung anzulegen.

8. Hydraulische Antischwingungsvorrichtung nach einem der vorhergehenden Ansprüche, dadurch gekennzeichnet, daß sie darüber hinaus zwei Meßfühler (24, 25), die jeweils die Schwingungen der beiden starren Armaturen (1, 3) auffangen können, und eine zweite Steuerkette (23 bis 26) enthält, die ausgehend von durch die beiden Meßfühler empfangenen Richtwerten und gegebenenfalls von zusätzlichen Werten, die insbesondere von einem Kraftfahrzeugmotor stammen, der Ursache von zu dämpfenden Schwingungen ist, elektrische Signale zur Speisung des elektrischen Erregers ausarbeiten kann, wobei die Signale geeignet sind, an das Ventil (8), das theoretisch stabilisiert ist, durch die erste Steuerkette (17 bis 22) nachgemachte Schwingungen anzulegen, die die Schwingungen annulieren können, die an der starren zu dämpfenden Armatur (3) auftreten.

9. Antischwingungsvorrichtung nach einem der vorhergehenden Ansprüche, dadurch gekennzeichnet, daß das Ventil (8) zwischen einer der beiden Kammern (A), die mit Flüssigkeit gefüllt sind, und einer dritten Kammer (C) angeordnet ist, die keine Flüssigkeit enthält und gegebenenfalls mit der Atmosphäre in Verbindung steht.

10. Hydraulische Antischwingungsvorrichtung nach Anspruch 9, dadurch gekennzeichnet, daß das Ventil (8) in einem starren Unterbau (29) befestigt ist, der mit zwei starren Armaturen durch jeweils zwei Abschnitte (6, 30) der Versteifungsstruktur aus elastomerem Material verbunden ist.

11. Hydraulische Antischwingungsvorrichtung nach einem der vorhergehenden Ansprüche, dadurch gekennzeichnet, daß das Ventil (8) und der Erreger, der mit diesem verbunden ist, an dem Element (1) der beiden starren Elemente befestigt ist, von dem die zu dämpfenden Schwingungen ausgehen.

12. Hydraulische Antischwingungsvorrichtung nach einem der vorhergehenden Ansprüche, dadurch gekennzeichnet, daß der Erreger so betrieben wird, daß er das Ventil (8) in einer Richtung beaufschlagt und daß eine Zugfeder (38) direkt oder indirekt zwischen diesem Ventil und einem der beiden starren Elemente eingefügt ist, um das Ventil in umgekehrter Richtung zu beaufschlagen.

13. Hydraulische Antischwingungsvorrichtung nach einem der vorhergehenden Ansprüche, dadurch gekennzeichnet, daß das Ventil (8) durch wenigstens eine ringförmige Armatur (41) geführt wird, die aus Zellen enthaltendem Material, vorzugsweise mit geschlossener Porosität, besteht.

14. Hydraulische Antischwingungsvorrichtung nach einem der vorhergehenden Ansprüche, dadurch gekennzeichnet, daß sie insofern eine Bauart mit einem doppelten Effekt darstellt, als die beiden Kammern (A, B) auf beiden Seiten des Ventils angeordnet sind und daß beide Kammern Arbeitskammern sind, d. h. daß jede Kammer im wesentlichen begrenzt wird von einer elastischen ringförmigen Wandung (6₁, 6₂), die einen hohen Widerstand gegenüber axialer Druckbelastung aufweist und durch Abschnitte der beiden starren Elemente (1₁, 1₂; 3), zwischen denen diese Wandung eingefügt ist.

15. Hydraulische Antischwingungsvorrichtung nach einem der vorhergehenden Ansprüche, dadurch gekennzeichnet, daß sie, verbunden mit demselben starren Element (3) und in bezug auf die den beiden starren Elementen (1, 3) gemeinsame Achse, symmetrisch zueinander zwei vollständige aus einem Ventil (8₁, 8₂) und dem mit ihm verbundenen Erreger bestehende Ausstattungen enthält, die so befestigt sind, daß die Achsen (U, V) der beiden Ventile sich schneiden und vorzugsweise unter einem Winkel von etwa 90° zueinander geneigt verlaufen.
